# FASCICULE DE BREVET EUROPEEN

(11) **EP 4 104 239 B1**
(45) Date de publication et mention de la délivrance du brevet: **30.07.2025**
(21) Numéro de dépôt: 21708723.8
(22) Date de dépôt: 11.02.2021
(51) Int. Cl.: H01M 10/613, H01M 10/625, H01M 10/6556, H01M 10/6568, H01M 50/249

(54) **DISPOSITIF DE STOCKAGE D'ÉNERGIE ÉLECTRIQUE POUR UN VÉHICULE AUTOMOBILE**
ELEKTRISCHE ENERGIESPEICHEREINRICHTUNG FÜR EIN KRAFTFAHRZEUG
ELECTRIC ENERGY STORAGE DEVICE FOR A MOTOR VEHICLE

(30) Priorité: 12.02.2020 FR 2001392
(43) Date de publication de la demande: 21.12.2022
(73) Titulaire: VALEO SYSTEMES THERMIQUES, 78320 Le Mesnil Saint-Denis (FR)
(72) Inventeur: BELLENFANT, Aurélie, 72210 LA SUZE SUR SARTHE (FR); JOVET, Bastien, 78322 LE MESNIL SAINT DENIS CEDEX (FR); ROBILLON, Lionel, 72210 LA SUZE SUR SARTHE (FR)
(74) Mandataire: Valeo Systèmes Thermiques
(86) Numéro de dépôt international: PCT/FR2021/050253
(87) Numéro de publication internationale: WO 2021/160970

(56) Documents cités:
- EP-A1- 2 546 904
- EP-B1- 2 546 904
- US-A1- 2016 172 727
- US-A1- 2019 077 276

## Description

La présente invention concerne le domaine des véhicules électriques, et plus particulièrement du domaine de la sécurité liée à l'utilisation de ces véhicules électriques.

Notamment afin de répondre aux enjeux climatiques actuels, les véhicules dits électriques ou hybrides, c'est-à-dire les véhicules qui fonctionnent, au moins partiellement, à l'énergie électrique, sont en plein développement.

De tels véhicules comprennent ainsi une chaîne de traction au moins partiellement électrique et ils sont équipés d'un dispositif de stockage d'énergie électrique configuré pour emmagasiner de l'énergie électrique et pour la restituer au moteur afin de faire tourner ce dernier.

Ces dispositifs de stockage d'énergie électrique comprennent classiquement une pluralité de cellules de stockage d'énergie électrique logées dans un boîtier de protection. Lors des phases de charge de ces cellules de stockage d'énergie électriques, ces dernières tendent à chauffer. Or des températures trop élevées risquent d'endommager ces cellules de stockage d'énergie électrique.

Afin de limiter le risque d'endommagement de ces cellules de stockage par une montée en température trop importante, le boîtier peut comporter, outre ces cellules de stockage, un dispositif de refroidissement, et par exemple un échangeur thermique au contact duquel sont agencées les cellules de stockage et dans lequel circule un fluide de refroidissement adapté pour capter des calories issues de ces cellules de stockage et ainsi les refroidir afin de les préserver.

Malgré ces précautions, des incidents peuvent survenir et notamment, il est possible qu'une des cellules de stockage prenne feu, par exemple à cause d'un défaut de fabrication de la cellule en question, à cause d'un court-circuit des cellules de stockage ou encore à cause d'un accident du véhicule, ou encore à cause d'une défaillance du dispositif de refroidissement. Un tel départ de feu présente le risque de générer un emballement thermique dans le dispositif de stockage électrique, c'est-à-dire une propagation du feu d'une cellule de stockage à l'autre, puis du dispositif de stockage au véhicule. Il est donc primordial de prévoir des systèmes capables de détecter et d'éteindre tout départ de feu qui pourrait survenir au cours de l'utilisation du véhicule, que ça soit en phase de roulage ou en phase de charge des cellules du dispositif de stockage. De tels systèmes sont connus des documents US 2019/077276 A1, US 2016/172727 A1 et EP 2546904 A1.

La présente invention s'inscrit dans ce contexte et vise à résoudre cette problématique en proposant un système de libération d'un fluide dans un dispositif de stockage d'énergie électrique, le système étant adapté pour détecter un départ de feu au sein du boîtier logeant les cellules de stockage d'énergie électrique et pour étouffer ce départ de feu.

Un objet de la présente invention concerne ainsi un dispositif de stockage d'énergie électrique destiné à un véhicule, comprenant au moins un boîtier dans lequel sont logés au moins une cellule de stockage d'énergie électrique et au moins un échangeur de chaleur configuré pour opérer un échange de chaleur entre un fluide de refroidissement adapté pour circuler dans l'au moins un échangeur de chaleur et la ou les cellules de stockage d'énergie électrique. Selon l'invention, l'échangeur de chaleur comprend au moins un organe de libération du fluide de refroidissement configuré pour libérer le fluide de refroidissement dans le boîtier.

Selon l'invention, le fluide de refroidissement circule dans l'échangeur de chaleur à une pression suffisante pour lui permettre d'être libéré suffisamment rapidement en cas de départ de feu. Par exemple, une pression de 200 bar permet une libération suffisamment rapide pour noyer totalement les cellules de stockage d'énergie électrique logées dans le boîtier du dispositif de stockage d'énergie électrique. En outre, une quantité de fluide de refroidissement apte à être libérée par l'organe de libération du fluide de refroidissement est au moins suffisante pour noyer les cellules de stockage d'énergie électrique. Autrement dit, cette quantité de fluide de refroidissement, ainsi que la pression à laquelle ce fluide de refroidissement circule dans l'échangeur de chaleur, sont suffisantes pour, au moins, recouvrir les cellules de stockage d'énergie électrique, prévenant ainsi tout risque incendie.

Selon l'invention, l'organe de libération du fluide de refroidissement comprend au moins un dispositif d'obturation configuré pour se rompre, au moins partiellement, à une température supérieure à 150°C et/ou à une pression supérieure à 200 Bars Selon l'invention, l'organe de libération du fluide de refroidissement comprend au moins une tête et au moins un corps, le corps comprenant au moins une première partie par laquelle il est rendu solidaire, par vissage, de l'échangeur de chaleur et au moins une deuxième partie modulaire rapportée sur la première partie et dans laquelle est agencé le dispositif d'obturation.

L'échangeur de chaleur selon l'invention est assemblé par brasage, c'est-à-dire que les éléments qui constituent cet échangeur de chaleur sont brasés entre eux. Un tel brasage s'effectue à des températures très élevées, de l'ordre de 600°C. Tel que précédemment évoqué, le dispositif d'obturation de l'organe de libération du fluide de refroidissement est configuré pour se rompre, au moins partiellement, lorsque la température dans le boîtier du dispositif de stockage d'énergie électrique augmente, suite à un départ de feu. Autrement dit, ce dispositif d'obturation est configuré pour se rompre, au moins partiellement, à une température avoisinant les 150°C et il convient donc de le rapporter sur l'échangeur de chaleur, après que celui-ci ait été brasé. Selon un exemple de la présente invention, l'organe de libération du fluide de refroidissement est vissé sur cet échangeur de chaleur. Par exemple, un filetage peut être ménagé sur la première partie du corps de cet organe de libération et un taraudage correspondant peut quant à lui être ménagé sur l'échangeur de chaleur. L'aspect modulaire de la deuxième partie du corps de l'organe de libération du fluide de refroidissement permet avantageusement de ne remplacer que cette deuxième partie, par exemple après qu'un départ de feu ait entrainé la rupture du dispositif d'obturation porté par cette deuxième partie.

Par exemple, le dispositif d'obturation peut prendre la forme d'une membrane adaptée pour se déchirer lorsqu'on lui applique une pression prédéterminée ou pour fondre lorsqu'elle est portée à une température prédéterminée. Par exemple, une ou plusieurs entailles formant autant d'amorces de rupture peuvent être ménagées dans cette membrane de sorte à permettre que cette dernière se rompe lorsqu'une pression suffisante lui est appliquée. Alternativement, la membrane peut présenter des épaisseurs différentes, et notamment une partie centrale de la membrane peut présenter une épaisseur inférieure au reste de la membrane de sorte que cette partie centrale se rompe lorsqu'une pression et/ou une température suffisante lui est appliquée. Avantageusement, ces pression et température prédéterminées correspondent aux pression et température atteintes dans le boîtier du dispositif de stockage d'énergie électrique en cas de départ de feu. Autrement dit, la présente invention permet une libération d'un fluide de refroidissement au sein du boîtier dès qu'un départ de feu est détecté ou bien dès que les conditions de déclenchement d'un départ de feu sont réunies.

Selon une caractéristique de la présente invention, l'échangeur de chaleur comprend au moins deux boîtes collectrices s'étendant selon une direction sensiblement transversale et entre lesquelles s'étendent au moins deux conduits de circulation du fluide de refroidissement reliés fluidiquement à chaque boîte collectrice, l'organe de libération du fluide de refroidissement étant agencé à une extrémité transversale d'au moins l'une des boîtes collectrices. Un conduit est dit relié fluidiquement à une boite collectrice dès lors qu'une ouverture permet le passage de fluide de refroidissement de la boite collectrice au conduit ou inversement. Plus précisément, l'échangeur de chaleur comprend au moins une boîte collectrice d'entrée configurée pour répartir le fluide de refroidissement dans les conduits de circulation du fluide de refroidissement et au moins une boîte collectrice de sortie configurée pour collecter le fluide de refroidissement après que celui-ci ait capté les calories issues des cellules de stockage d'énergie électrique, l'organe de libération du fluide de refroidissement pouvant être agencé indifféremment sur la boîte collectrice d'entrée et/ou sur la boîte collectrice de sortie.

Selon un exemple de réalisation de la présente invention, l'échangeur de chaleur comprend au moins un collecteur intermédiaire agencé entre les deux boîtes collectrices, parallèlement à ces deux boîtes collectrices, au moins un organe de libération du fluide de refroidissement étant agencé à une extrémité de ce collecteur intermédiaire. Des premiers conduits de circulation sont agencées entre une boîte collectrice et le collecteur intermédiaire et des deuxièmes conduits de circulation sont agencés entre l'autre boîte collectrice et le collecteur intermédiaire. Avantageusement, cet au moins un collecteur intermédiaire est agencé à égale distance des deux boîtes collectrices.

Selon un autre exemple de réalisation de la présente invention, l'échangeur de chaleur comprend une pluralité de collecteurs intermédiaires agencés entre les deux boîtes collectrices. Avantageusement, ces collecteurs intermédiaires sont alignés le long d'une droite parallèle à une droite d'extension principale d'au moins l'une des boîtes collectrices, ces collecteurs intermédiaires étant agencés à équidistance des deux boîtes collectrices.

Selon une caractéristique de la présente invention, l'au moins un organe de libération du fluide de refroidissement s'étend selon un axe d'extension principal parallèle à une direction d'extension principale de l'au moins une boîte collectrice sur laquelle est agencé cet au moins un organe de libération du fluide de refroidissement. Selon une autre caractéristique de la présente invention, l'au moins un organe de libération du fluide de refroidissement s'étend selon un axe d'extension principal sécant d'une direction d'extension principale de l'au moins une boîte collectrice sur laquelle est agencé cet au moins un organe de libération du fluide de refroidissement. Avantageusement, l'axe d'extension principal de l'organe de libération du fluide de refroidissement peut être perpendiculaire à la direction d'extension principale de l'au moins une boîte collectrice concernée. Il est entendu que ces caractéristiques sont compatibles entre elles, c'est-à-dire qu'un échangeur de chaleur comprenant d'une part au moins un organe de libération du fluide de refroidissement dont l'axe d'extension principal s'étend parallèlement à la direction d'extension principale de la boîte collectrice qui le porte et d'autre part au moins un autre organe de libération du fluide de refroidissement dont l'axe d'extension principal est sécant de la direction d'extension principale de la boîte collectrice qui le porte est également couvert par la présente invention.

Selon l'invention, le fluide de refroidissement est un fluide composé majoritairement de dioxyde de carbone. En tout état de cause, ce fluide de refroidissement est choisi d'une part pour sa capacité à capter, transporter et céder des calories, et d'autre part pour sa capacité à ne pas participer à l'excitation et la propagation du feu au sein de l'enceinte. Autrement dit, on comprend que le fluide composé majoritairement de dioxyde de carbone sert à la fois de fluide de refroidissement lorsqu'il circule dans l'échangeur de chaleur, c'est-à-dire qu'il est alors configuré pour capter des calories issues des cellules de stockage d'énergie électrique du dispositif de stockage d'énergie électrique afin de refroidir ces dernières, et également de fluide extincteur, c'est-à-dire un fluide capable d'étouffer un départ de feu, notamment en étant projeté dans le boîtier à haut débit pour remplir quasi instantanément le volume défini par le boîtier et retirer l'oxygène présent apte à favoriser la propagation du feu.

La présente invention concerne également un véhicule automobile, comprenant au moins un dispositif de stockage d'énergie électrique tel que précédemment décrit. D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :

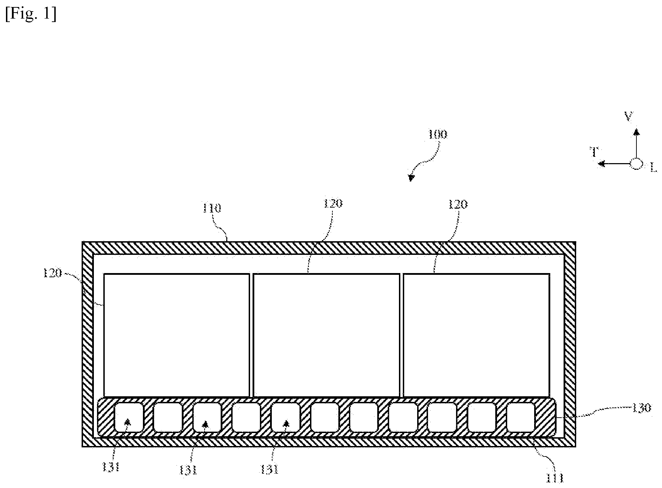

[Fig. 1] illustre, schématiquement, vu en coupe transversale, un dispositif de stockage d'énergie électrique selon la présente invention ;

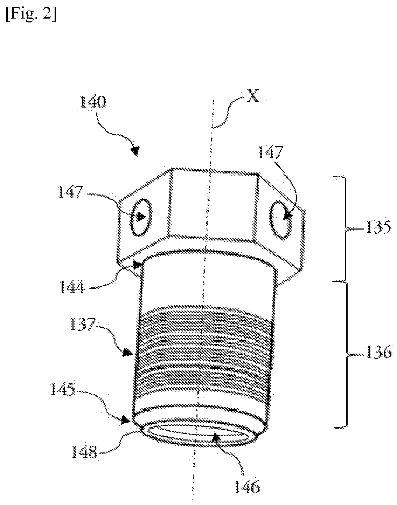

[Fig. 2] illustre, schématiquement et en perspective, un organe de libération d'un fluide de refroidissement destiné à être intégré à un dispositif de stockage d'énergie électrique selon l'invention ;

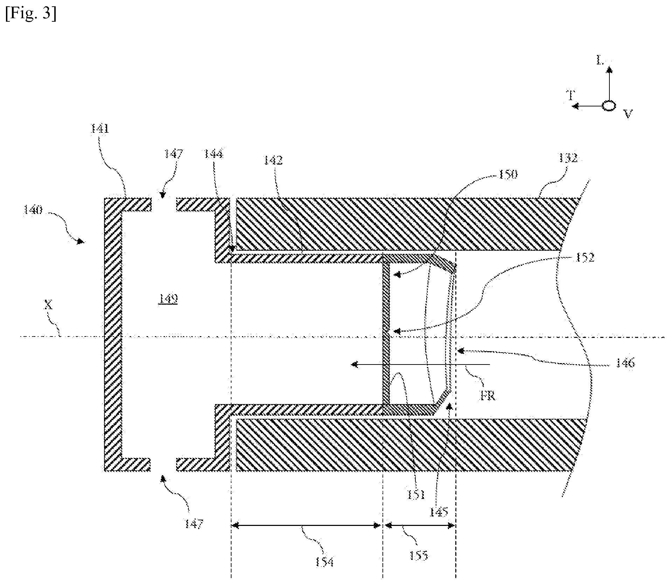

[Fig. 3] illustre, schématiquement, vu selon une coupe longitudinale, l'organe de libération du fluide de refroidissement illustré sur la figure 2, cet organe de libération étant représenté intégré dans une boîte collectrice d'un échangeur de chaleur du dispositif de stockage d'énergie électrique selon un premier exemple de réalisation de l'invention ;

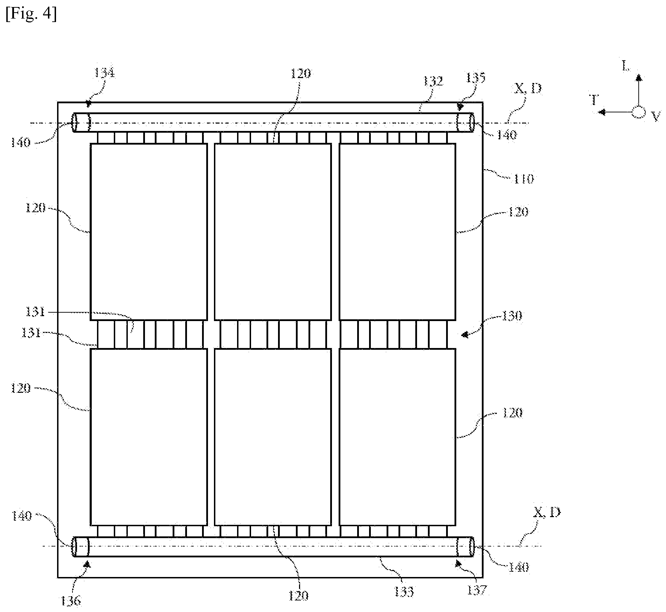

[Fig. 4] illustre, schématiquement, vu de dessus, le dispositif de stockage d'énergie électrique selon le premier exemple de réalisation, un boîtier de ce dispositif de stockage d'énergie électrique étant représenté selon une coupe longitudinale pour rendre visible les éléments logés dans ce boîtier ;

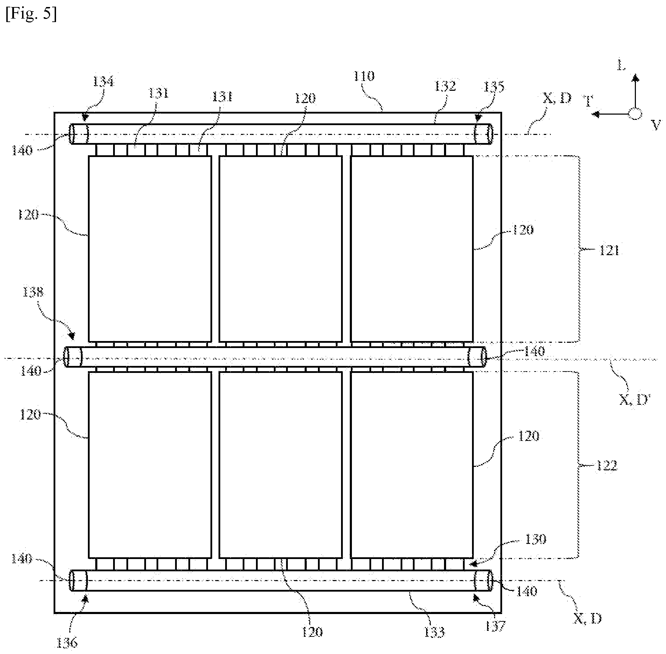

[Fig. 5] illustre, schématiquement, vu de dessus, le dispositif de stockage d'énergie électrique selon un deuxième exemple de réalisation, un boîtier de ce dispositif de stockage d'énergie électrique étant représenté selon une coupe longitudinale pour rendre visible les éléments logés dans ce boîtier ;

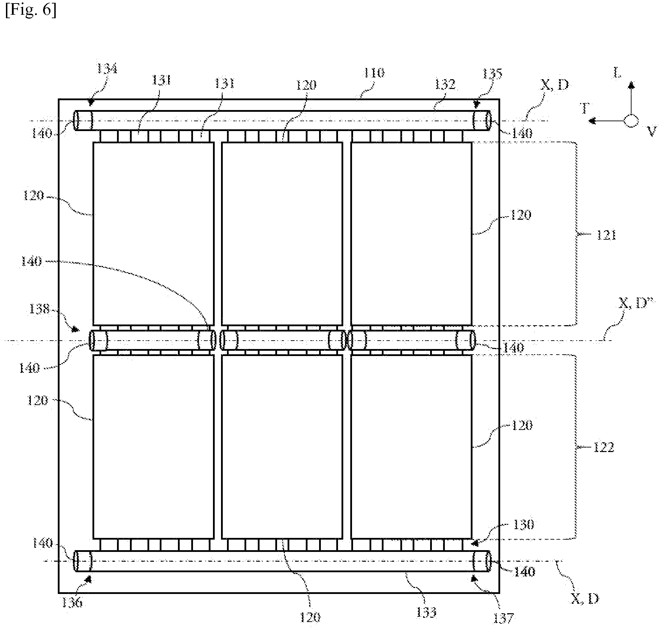

[Fig. 6] illustre, schématiquement, vu de dessus, le dispositif de stockage d'énergie électrique selon un troisième exemple de réalisation, un boîtier de ce dispositif de stockage d'énergie électrique étant représenté selon une coupe longitudinale pour rendre visible les éléments logés dans ce boîtier ;

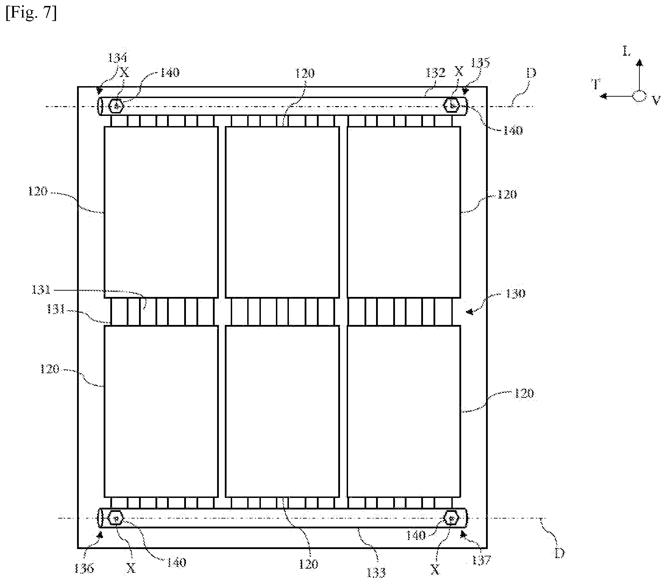

[Fig. 7] illustre, schématiquement, vu de dessus, le dispositif de stockage d'énergie électrique selon une variante du premier exemple de réalisation de la présente invention, un boîtier de ce dispositif de stockage d'énergie électrique étant représenté selon une coupe longitudinale pour rendre visible les éléments logés dans ce boîtier.

Les caractéristiques, variantes et les différentes formes de réalisation de l'invention peuvent être associées les unes avec les autres, selon diverses combinaisons, dans la mesure où elles ne sont pas incompatibles ou exclusives les unes aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique antérieur.

Sur les figures, les dénominations longitudinale, verticale, transversale, gauche, droite, dessus, dessous se réfèrent à l'orientation des trièdres L, V, T. Dans ce repère, un axe longitudinal L représente une direction longitudinale, un axe transversal T représente une direction transversale, et un axe vertical V représente une direction verticale de l'objet considéré. Dans la description qui suit les termes « stockage d'énergie électrique » et « stockage » seront utilisés sans distinction, une coupe transversale correspondra à une coupe réalisée selon un plan transversal et vertical, c'est-à-dire un plan dans lequel s'inscrivent l'axe transversal T et l'axe vertical V du trièdre et une coupe « longitudinale » correspondra à une coupe réalisée selon un plan longitudinal et transversal, c'est-à-dire un plan dans lequel s'inscrivent l'axe longitudinal L et l'axe transversal T du trièdre illustré.

La figure 1 illustre ainsi, vu selon une coupe transversale, un dispositif de stockage 100 d'énergie électrique selon l'invention. Tel que représenté, ce dispositif de stockage 100 comprend au moins un boîtier 110 qui loge au moins une, avantageusement une pluralité, de cellules de stockage 120 d'énergie électrique et au moins un échangeur de chaleur 130 dédié au traitement thermique des cellules de stockage 120. Optionnellement, le dispositif de stockage 100 selon l'invention peut comprendre plusieurs échangeurs de chaleur, chacun dédié au traitement de thermique d'une ou plusieurs cellules de stockage 120.

L'échangeur de chaleur 130 comprend au moins deux boîtes collectrices 132, 133 - par exemple illustrées sur les figures 4 à 7 - entre lesquelles s'étend au moins un conduit 131 dans lequel un fluide de refroidissement est apte à circuler. Selon l'exemple illustré, l'échangeur de chaleur 130 comprend une pluralité de conduits 131. Chacun de ces conduits débouche sur l'une des boîtes collectrices et une communication fluidique est agencée entre les conduits et les boîtes collectrices de sorte que le fluide de refroidissement puisse circuler dans l'ensemble de l'échangeur de chaleur. Plus particulièrement, l'échangeur de chaleur 130 comprend une boîte collectrice d'entrée configurée pour répartir le fluide de refroidissement dans les conduits 131 et une boîte collectrice de sortie configurée pour collecter le fluide de refroidissement une fois l'échange de chaleur avec les cellules de stockage 120 opéré.

Les cellules de stockage 120 sont agencées au contact de l'échangeur de chaleur 130, ou à tout le moins au voisinage direct, et plus particulièrement au contact des conduits 131 dans lesquels circule le fluide de refroidissement. Le cas échéant, une pâte thermique peut être interposée entre les cellules de stockage et les conduits 131. En cours d'utilisation, ces cellules de stockage 120 tendent à chauffer, et ce phénomène s'aggrave pendant les phases dites « de charge » c'est à dire lorsque ces cellules de stockage 120 emmagasinent l'énergie électrique qu'elles sont destinées à stocker. De telles augmentations de température ne sont pas souhaitables puisqu'elles peuvent entrainer un endommagement irréversible de ces cellules de stockage 120. Ainsi, lorsque ces cellules de stockage 120 chauffent, le fluide de refroidissement qui circule dans ces conduits 131 est configuré pour capter des calories issues de ces cellules de stockage 120 de sorte à refroidir ces dernières.

L'échangeur de chaleur 130 est par ailleurs agencé sur un circuit de fluide de refroidissement -non illustré ici - grâce auquel le fluide de refroidissement se décharge, dans une zone à distance des cellules de stockage, des calories ainsi captées de sorte qu'il est de nouveau apte à capter les calories issues des cellules de stockage 120 une fois qu'il revient dans les conduits 131 de l'échangeur de chaleur 130. Le circuit de fluide de refroidissement peut, sans sortir du contexte de l'invention, aussi bien être intégralement compris dans le boîtier ou bien s'étendre en partie à l'extérieur du boîtier pour que la zone à distance des cellules de stockage soit en dehors du boîtier.

Selon l'invention, ce fluide de refroidissement est un fluide non inflammable adapté pour échanger des calories avec les cellules de stockage 120. Par exemple, ce fluide de refroidissement est composé, en majorité, de dioxyde de carbone.

L'échangeur de chaleur 130 est ainsi agencé, d'une part au contact des cellules de stockage 120, et, d'autre part, au contact, direct ou indirect, d'une paroi de fond 111 du boîtier 110. Autrement dit, cet échangeur de chaleur 130 peut être agencé directement au contact de cette paroi de fond 111 ou, alternativement, un élément de support peut être interposé entre la paroi de fond 111 du boîtier 110 et l'échangeur de chaleur 130. Optionnellement cet élément de support peut être configuré pour exercer une pression verticale, c'est-à-dire une pression qui s'exerce parallèlement à l'axe vertical V du trièdre illustré, sur la paroi de fond 111, de sorte à plaquer l'échangeur de chaleur 130 contre les cellules de stockage 120 afin d'optimiser l'échange de chaleur qui s'opère entre le fluide de refroidissement qui circule dans l'échangeur de chaleur 130 et ces cellules de stockage 120.

Selon l'invention, au moins l'une des boîtes collectrices de l'échangeur de chaleur 130 comprend un organe de libération 140 du fluide de refroidissement par exemple illustré sur les figures 2 et 3. Dans la suite de la description les termes « organe de libération du fluide de refroidissement » et « organe de libération » seront utilisés sans distinction. On entend par « organe de libération 140 du fluide de refroidissement » un organe configuré pour permettre au fluide de refroidissement qui circule dans l'échangeur de chaleur 130 de s'échapper de cet échangeur de chaleur sous certaines conditions prédéterminées. Selon l'invention, l'organe de libération 140 est plus particulièrement configuré pour permettre une libération du fluide de refroidissement dans le boîtier du dispositif de stockage lorsqu'une température ou une pression au sein de ce boîtier dépasse une valeur seuil prédéterminée. Avantageusement, cette valeur seuil est déterminée de sorte que la libération de fluide soit opérée en cas de départ d'un feu au sein de l'une des cellules de stockage logées dans ledit boîtier. On comprend que cette libération de fluide permet de noyer les cellules de stockage de sorte que le feu est étouffé rapidement, limitant ainsi les dégâts potentiels qu'il pourrait causer en se propageant. Autrement dit, une quantité de fluide de refroidissement circulant dans l'échangeur de chaleur et apte à être libérée dans le boîtier par l'au moins un organe de libération du fluide de refroidissement est au moins suffisante pour recouvrir les cellules de stockage 120. Il est également entendu que la pression du fluide de refroidissement dans l'échangeur de chaleur est choisie pour permettre cette libération du fluide de refroidissement dans l'ensemble du boîtier. Par exemple, le fluide de refroidissement circule ainsi à une pression comprise entre 25 et 132 Bars.

Les figures 2 et 3 illustrent ainsi un exemple de réalisation d'un tel organe de libération du fluide de refroidissement, la figure 2 étant une vue en perspective de cet organe de libération du fluide de refroidissement et la figure 3 étant une vue en coupe de cet organe de libération du fluide de refroidissement intégré dans une boîte collectrice 132 de l'échangeur de chaleur 130. Il est entendu qu'il ne s'agit que d'un exemple de réalisation et que tout autre organe de libération 140 du fluide de refroidissement présentant les même fonctionnalités que celles qui sont décrites ci-dessous est envisageable sans sortir du contexte de la présente invention.

Selon l'exemple illustré, l'organe de libération 140 prend la forme générale d'une vis, c'est-à-dire qu'il s'étend majoritairement selon un axe d'extension principal X et qu'il comprend au moins une tête 141 et un corps 142 alignés l'un après l'autre le long de l'axe d'extension principal X. Un filetage 143 est ménagé sur le corps 142 de sorte à permettre son montage, en l'espèce par vissage, sur au moins l'une des boîtes collectrices 132 de l'échangeur de chaleur, ladite boîte collectrice 132 étant équipé d'un taraudage correspondant. Il est entendu que tout autre moyen de montage de cet organe de libération 140 sur l'échangeur de chaleur est envisageable sans sortir du contexte de la présente invention. Le corps 142 présente une forme cylindrique, ou sensiblement cylindrique, ouverte à ses deux extrémités. Une première extrémité 144 du corps 142 est ainsi en communication avec un corps creux 149 délimité par la tête 141 de l'organe de libération 140 et une deuxième extrémité 145 de ce corps 142 débouche quant à lui sur un environnement externe à cet organe de libération 140 par un orifice 146.

Selon l'invention, cet organe de libération 140 est destiné à être monté sur l'échangeur de chaleur par la deuxième extrémité 145 du corps 142. Autrement dit, le fluide de refroidissement FR qui circule dans l'échangeur de chaleur est apte à rejoindre le corps 142 de l'organe de libération 140 par l'intermédiaire de l'orifice 146 ménagé dans cette deuxième extrémité 145 du corps 142, puis à rejoindre la tête 141 de l'organe de libération 140, et plus particulièrement le corps creux 149 délimité par cette tête 141, par la première extrémité 144 du corps 142. Au moins un trou 147, avantageusement une pluralité de trous 147, est ménagé dans la tête 141 de l'organe de libération 140, ce(s) trou(s) étant configuré(s) pour permettre la libération du fluide de refroidissement en dehors de l'échangeur de chaleur, c'est-à-dire, lorsque l'organe de libération 140 est monté sur la boîte collectrice 132 correspondante, dans le boîtier du dispositif de stockage d'énergie électrique.

On comprend donc que le fluide de refroidissement est apte, sous certaines conditions et notamment celle qu'une communication fluidique existe entre la boîte collectrice et le volume interne du corps 142 de l'organe de libération, à quitter la boîte collectrice de l'échangeur de chaleur dans laquelle il circule pour rejoindre, tout d'abord, le corps 142 de l'organe de libération 140, puis le corps creux 149 délimité par la tête 141 de cet organe de libération 140 et enfin l'enceinte du boîtier du dispositif de stockage. A nouveau, il est entendu qu'en condition d'utilisation à des températures et pressions normales, le dispositif d'obturation 150 empêche le fluide de refroidissement de rejoindre le corps creux 149 délimité par la tête 141 de l'organe de libération 140, ce fluide de refroidissement circulant alors exclusivement dans l'échangeur de chaleur et dans le circuit de fluide de refroidissement qui porte cet échangeur de chaleur.

Afin d'éviter toute fuite de fluide de refroidissement, un dispositif d'étanchéité 148 - par exemple illustré sur la figure 2 - est optionnellement interposé entre l'échangeur de chaleur, et plus particulièrement, entre l'une des boîtes collectrices de cet échangeur de chaleur, et la deuxième extrémité 145 du corps 142 de l'organe de libération 140. Autrement dit, ce dispositif d'étanchéité 148 s'étend sur un pourtour de l'orifice 146 ménagé dans la deuxième extrémité 145 du corps 142.

Tel que précédemment mentionné, l'organe de libération 140 est plus particulièrement configuré pour permettre la libération du fluide de refroidissement lorsque la pression et/ou la température au sein du boîtier dépasse une valeur seuil prédéterminée. Tel qu'illustré sur la figure 3, l'organe de libération 140 comprend un dispositif d'obturation 150 agencé dans le corps 142 de l'organe de libération 140, en aval de l'orifice 146 par rapport à un sens de circulation du fluide de refroidissement FR dans cet organe de libération 140, ce dispositif d'obturation 150 étant configuré pour autoriser le passage de fluide de refroidissement FR uniquement lorsque la température et/ou la pression dans le boîtier dépasse la valeur seuil.

Selon l'exemple illustré, ce dispositif d'obturation 150 prend la forme d'une membrane 151 qui présente au moins une entaille 152 qui forme une amorce de rupture. Autrement dit, cette membrane 151 est ainsi fragilisée au niveau de cette au moins une entaille 152 de sorte que, lorsqu'une pression suffisante est appliquée sur cette membrane 150, elle se déchire, libérant alors le fluide de refroidissement FR dans le boîtier du dispositif de stockage.

Alternativement, on peut prévoir que la membrane présente une épaisseur calculée de sorte à ce que celle-ci se déchire lorsqu'une pression suffisante lui est appliquée. Selon encore une autre alternative, cette membrane peut être réalisée dans un matériau qui fond à partir d'une certaine température, avantageusement la valeur seuil prédéterminée.

Le corps 142 de cet organe de libération 140 comprend plus particulièrement au moins une première partie 154 sur laquelle est ménagé le filetage et au moins une deuxième partie 155 porteuse du dispositif d'obturation 150. Ainsi, tel qu'illustré, la première partie 154 du corps 142 s'étend depuis la tête 141de l'organe de libération 140, jusqu'au dispositif d'obturation 150 et la deuxième partie 155 du corps 142 s'étend quant à elle du dispositif d'obturation 150, qui fait partie de cette deuxième partie 155 du corps 142, jusqu'à l'orifice 146 qui participe à former la deuxième extrémité 145 de ce corps 142. Avantageusement, une telle réalisation en deux parties distinctes permet de faciliter le remplacement du dispositif d'obturation 150 après que celui-ci ait été déchiré. On comprend en effet qu'en cas de rupture du dispositif d'obturation 150, l'organe de libération 140 peut être dévissé de la boîte collectrice 132 qui le porte de sorte que la deuxième partie 155 du corps 142 puisse être ôtée et remplacée par une autre deuxième partie 155, neuve, c'est-à-dire une deuxième partie 155 comprenant un dispositif d'obturation 150 intègre.

Il résulte de ce qui précède que le dispositif d'obturation 150 est, selon l'exemple illustré ici, agencé à proximité de la deuxième extrémité 145 du corps 142 de l'organe de libération 140, c'est-à-dire plus près de cette deuxième extrémité 145 du corps 142 que de la tête 141 de cet organe de libération 140.

Les figures 4 à 7 illustrent différents exemples et variantes de réalisation du dispositif de stockage selon l'invention qui diffèrent les uns des autres notamment par le positionnement et l'orientation de l'organe de libération 140 par rapport à l'échangeur de chaleur 130. Ces figures illustrent plus particulièrement le dispositif de stockage d'énergie électrique 100, vu de dessus, et dans lequel le boîtier 110 est représenté vu selon une coupe longitudinale afin de rendre visible l'échangeur de chaleur 130 ainsi que les cellules de stockage 120 de ce dispositif de stockage 100. Selon les exemples illustrés ici, le dispositif de stockage d'énergie électrique 100 comprend six cellules de stockage 120 d'énergie électrique réparties sur deux rangées. Autrement dit, ces cellules de stockage sont alignées, trois par trois, le long de deux axes transversaux parallèles. Il est entendu qu'il ne s'agit que d'un exemple de réalisation et qu'on pourra prévoir que le dispositif de stockage d'énergie électrique 100 comprenne un nombre inférieur ou supérieur de cellules de stockage 120 sans sortir du contexte de la présente invention.

Tel que précédemment évoqué, l'échangeur de chaleur 130 comprend une boîte collectrice d'entrée 132, une boîte collectrice de sortie 133 et une pluralité de conduits 131 dans lesquels circule le fluide de refroidissement et qui s'étendent entre la boîte collectrice d'entrée 132 et la boîte collectrice de sortie 133. Tel qu'illustré, la boîte collectrice d'entrée 132 et la boîte collectrice de sortie 133 s'étendent, respectivement, selon une droite d'extension principale D parallèle à l'axe transversal T du trièdre illustré. Par exemple, l'échangeur de chaleur 130 peut comprendre au moins un organe de libération 140 du fluide de refroidissement agencé à une extrémité transversale de l'une des boîtes collectrices 132, 133. Avantageusement, l'échangeur de chaleur 130 comprend une pluralité d'organes de libération 140 du fluide de refroidissement, répartis à chacune des extrémités transversales 134, 135, 136, 137 de ces boîtes collectrices 132, 133.

En cas de départ d'un feu au niveau de l'une des cellules de stockage 120 d'énergie électrique, une pression et/ou une température dans le boîtier 110 augmente brusquement. Tel que précédemment évoqué, une telle augmentation de la pression et/ou de la température au sein du boîtier entraine une rupture du dispositif d'obturation agencé dans l'organe de libération 140 le plus proche du départ de feu, c'est-à-dire dans l'organe de libération 140 qui subit le changement de température/pression le plus important. Il en résulte un remplissage du boîtier 110, dans une zone autour de cet organe de libération 140, et donc autour de la cellule de stockage 120 dans laquelle se produit le départ de feu. Selon l'invention, la libération de fluide de refroidissement se poursuit jusqu'à ce que le boîtier 110 soit totalement, ou quasiment totalement, rempli de fluide de refroidissement. Avantageusement, l'invention permet ainsi de libérer le fluide de refroidissement composé en majorité de dioxyde de carbone, rapidement et au plus près du départ de feu, assurant ainsi un étouffement rapide du départ de feu, c'est-à-dire coupant ainsi rapidement l'arrivée d'oxygène au niveau de ce départ de feu, ce qui empêche sa propagation.

Selon un premier exemple de réalisation illustré sur la figure 4, l'échangeur de chaleur 130 comprend quatre organes de libération 140 du fluide de refroidissement. Ainsi, selon ce premier exemple de réalisation, un premier organe de libération 140 est agencé à une première extrémité transversale 134 de la boîte collectrice d'entrée 132, un deuxième organe de libération 140 est agencé à une deuxième extrémité transversale 135 de la boîte collectrice d'entrée 132, un troisième organe de libération 140 est agencé à une première extrémité transversale 136 de la boîte collectrice de sortie 133 et un quatrième organe de libération 140 est agencé à une deuxième extrémité transversale 137 de la boîte collectrice de sortie 133. Selon l'exemple illustré ici, l'axe d'extension principal X de chaque organe de libération 140 est confondu avec la droite d'extension principale D de la boîte collectrice 132, 133 qui porte l'organe de libération 140 concerné.

Le deuxième et le troisième exemples de réalisation illustrés, respectivement, sur les figures 5 et 6 diffèrent du premier exemple de réalisation en ce que l'échangeur de chaleur 130 comprend au moins un collecteur intermédiaire 138 agencé sensiblement à égale distance de la boîte collectrice d'entrée 132 et de la boîte collectrice de sortie 133. Tel que représenté, cet au moins un collecteur intermédiaire 138 est positionné entre une première rangée 121 de trois cellules de stockage 120 et une deuxième rangée 122 de trois cellules de stockage 120. Autrement dit, cet au moins un collecteur intermédiaire 138 est positionné sensiblement en un centre du dispositif de stockage 100. Avantageusement, cet au moins un collecteur intermédiaire 138 est équipé d'au moins un, avantageusement au moins deux, organe de libération 140 du fluide de refroidissement.

Selon le deuxième exemple de réalisation illustré sur la figure 5, l'échangeur de chaleur 130 comprend un seul collecteur intermédiaire 138 équipé de deux organes de libération 140 respectivement agencés à chacune des extrémités transversales de ce collecteur intermédiaire 138. Selon l'exemple illustré, on note que ce collecteur intermédiaire 138 est identique, ou sensiblement identique aux boîtes collectrices 132, 133 quant à elle réparties aux extrémités longitudinales de l'échangeur de chaleur 130 à la seul exception que des conduits 131 sont raccordés fluidiquement au collecteur intermédiaire 138 de part et d'autre de celui-ci. Autrement dit, ce collecteur intermédiaire 138 s'étend principalement selon une droite d'extension principale D' parallèle à l'axe transversal T du trièdre illustré et présente une forme et des dimensions équivalentes ou sensiblement équivalentes à la forme et à la dimension des boîtes collectrices 132, 133. Il est entendu qu'il ne s'agit que d'un exemple de réalisation et que ce collecteur intermédiaire 138 pourrait être différent sans sortir du contexte de la présente invention dans la mesure où il comprend au moins un organe de libération du fluide de refroidissement qui présente les caractéristiques décrites ci-dessus.

Selon le troisième exemple de réalisation illustré sur la figure 6, l'échangeur de chaleur 130 comprend trois collecteurs intermédiaires 135 alignés le long d'une droite transversale D", c'est-à-dire une droite parallèle à l'axe transversal T, et chacun des collecteurs intermédiaires est équipé de deux organes de libération 140, répartis aux deux extrémités transversales de chacun de ces collecteurs intermédiaires 135. A nouveau, il ne s'agit que d'un exemple de réalisation et l'on pourra prévoir qu'un nombre différent d'organes de libération de fluide de refroidissement soit réparti sur chaque collecteur intermédiaire, et que l'échangeur de chaleur comprenne un nombre différent de collecteurs intermédiaires sans sortir du contexte de la présente invention.

On note que selon les exemples de réalisation illustrés sur les figures 5 et 6, l'axe d'extension principal X de chaque organe de libération 140 est confondu avec la droite d'extension principale D' du collecteur intermédiaire 138 ou avec la direction transversale D" le long de laquelle sont alignés les collecteurs intermédiaires porteurs de ces organes de libération 140.

La figure 7 illustre une variante du premier exemple de réalisation. Cette variante diffère du premier exemple de réalisation illustré sur la figure 4 dans l'orientation des organes de libération 140 du fluide de refroidissement. Ainsi, selon les trois exemples de réalisation qui viennent d'être décrits, les organes de libération 140 sont agencés aux extrémités transversales des boîtes collectrices 132, 133/collecteurs intermédiaires 138 et s'étendent, majoritairement, parallèlement à l'axe transversal T. En d'autres termes, les organes de libération 140 sont agencés de sorte que le fluide de refroidissement est amené à traverser ces organes selon une direction transversale sensiblement dans le prolongement de la boite collectrice correspondante. Selon la variante illustrée sur la figure 7, on comprend que ces organes de libération 140 sont également agencés à proximité des extrémités transversales des boîtes collectrices 132, 133, c'est-à-dire plus près des extrémités transversales de ces boîtes collectrices que d'un centre de ces dernières mais que l'orientation de ces organes de libération diffèrent en ce qu'ils s'étendent parallèlement à l'axe vertical V. Autrement dit, l'axe d'extension principal X de chaque organe de libération 140 est sécant, avantageusement perpendiculaire, de la direction d'extension principale D des boîtes collectrices 132, 133. Le principe de fonctionnement des organes de libération 140 de fluide de refroidissement selon cette variante est identique à celui décrit précédemment.

Avantageusement, cette variante de réalisation est également transposable aux deuxième et troisième exemples de réalisation illustrés sur les figures 5 et 6, c'est-à-dire que, selon l'invention, l'axe d'extension principal X de chaque organe de libération 140 est transversal, avantageusement perpendiculaire, à la droite d'extension principale de l'unique collecteur intermédiaire ou à la direction transversale le long de laquelle les collecteurs intermédiaires sont alignés.

Selon une autre variante du premier exemple de réalisation non illustrée ici, les organes de libération du fluide de refroidissement sont agencés à distance des extrémités transversale, par exemple plus proche d'un centre de la boîte collectrice qui les porte que de n'importe laquelle de ces extrémités transversale. Le reste de la description qui vient d'être donnée en référence à la figure 7 s'applique mutatis mutandis à cette autre variante non illustrée.

On comprend à la lecture de ce qui précède que la présente invention propose un moyen simple et peu coûteux qui permet de gérer les départs de feu qui peuvent survenir au niveau des dispositifs de stockage d'énergie électrique dans les véhicules électriques ou hybrides équipés de tels dispositifs, et plus particulièrement qui permet d'étouffer un tel départ de feu, améliorant ainsi la sécurité des usagers du véhicule concerné et également la sécurité des autres usagers qui partage la route avec ces véhicules.

L'invention ne saurait toutefois se limiter aux moyens et configurations décrits et illustrés ici. L'invention est définie par l'objet des revendications ci-jointes.

En particulier, le nombre, la forme et la disposition des organes de libération de fluide de refroidissement pourront être modifié sans nuire à l'invention dans la mesure où ils remplissent les fonctionnalités décrites dans le présent document.

## Revendications

1. Dispositif de stockage (100) d'énergie électrique destiné à un véhicule, comprenant au moins un boîtier (110) dans lequel sont logés au moins une cellule de stockage (120) d'énergie électrique et au moins un échangeur de chaleur (130) configuré pour opérer un échange de chaleur entre un fluide de refroidissement adapté pour circuler dans l'au moins un échangeur de chaleur (130) et la ou les cellules de stockage (120) d'énergie électrique, **caractérisé en ce que** l'échangeur de chaleur (130) comprend au moins un organe de libération (140) du fluide de refroidissement configuré pour libérer le fluide de refroidissement dans le boîtier (110) et **en ce que** l'organe de libération (140) du fluide de refroidissement comprend au moins un dispositif d'obturation (150) configuré pour se rompre, au moins partiellement, à une température supérieure à 150°C et/ou à une pression supérieure à 200 Bars et comprend au moins une tête (141) et au moins un corps (142), le corps (142) comprenant au moins une première partie (154) par laquelle il est rendu solidaire, par vissage, de l'échangeur de chaleur (130) et au moins une deuxième partie (155) modulaire rapportée sur la première partie (154) et dans laquelle est agencé le dispositif d'obturation (150).

2. Dispositif de stockage (100) d'énergie électrique selon la revendication précédente, dans lequel l'échangeur de chaleur (130) comprend au moins deux boîtes collectrices (132, 133) s'étendant selon une direction transversale et entre lesquelles s'étendent au moins deux conduits de circulation (131) du fluide de refroidissement reliés fluidiquement à chaque boîte collectrice, l'organe de libération (140) du fluide de refroidissement étant agencé à une extrémité transversale (134, 135, 136, 137) d'au moins l'une des boîtes collectrices (132, 133).

3. Dispositif de stockage (100) d'énergie électrique selon la revendication précédente, dans lequel l'échangeur de chaleur (130) comprend au moins un collecteur intermédiaire (138) agencé entre les deux boîtes collectrices (132, 133), parallèlement à ces deux boîtes collectrices, au moins un organe de libération (140) du fluide de refroidissement étant agencé à une extrémité de ce collecteur intermédiaire (138).

4. Dispositif de stockage (100) d'énergie électrique selon la revendication précédente, dans lequel l'échangeur de chaleur (130) comprend une pluralité de collecteurs intermédiaires (138) agencés entre les deux boîtes collectrices (132, 133).

5. Dispositif de stockage (100) d'énergie électrique selon l'une quelconque des revendications 4 à 6, dans lequel l'au moins un organe de libération (140) du fluide de refroidissement s'étend selon un axe d'extension principal (X) parallèle à une direction d'extension principale (D) de l'au moins une boîte collectrice (132, 133) sur laquelle est agencé cet au moins un organe de libération (140) du fluide de refroidissement.

6. Dispositif de stockage (100) d'énergie électrique selon l'une quelconque des revendications 2 à 5, dans lequel l'au moins un organe de libération (140) du fluide de refroidissement s'étend selon un axe d'extension principal (D) sécant d'une direction d'extension principale (D) de l'au moins une boîte collectrice (132, 133) sur laquelle est agencé cet au moins un organe de libération (140) du fluide de refroidissement.

7. Dispositif de stockage (100) d'énergie électrique selon l'une quelconque des revendications précédentes, dans lequel le fluide de refroidissement est un fluide composé majoritairement de dioxyde de carbone.

8. Véhicule automobile, comprenant au moins un dispositif de stockage (100) d'énergie électrique selon l'une quelconque des revendications précédentes.

## Patentansprüche

1. Elektrische Energiespeichervorrichtung (100) für ein Fahrzeug, umfassend mindestens ein Gehäuse (110), in dem mindestens eine elektrische Energiespeicherzelle (120) und mindestens ein Wärmetauscher (130) untergebracht sind, der dazu konfiguriert ist, einen Wärmeaustausch zwischen einem Kühlfluid, das zum Zirkulieren in dem mindestens einen Wärmetauscher (130) geeignet ist, und der oder den elektrischen Energiespeicherzellen (120) zu bewirken, **dadurch gekennzeichnet, dass** der Wärmetauscher (130) mindestens ein Kühlfluid-Freisetzungselement (140) umfasst, das dazu konfiguriert ist, das Kühlfluid in das Gehäuse (110) freizusetzen, und dass das Kühlfluid-Freisetzungselement (140) mindestens eine Verschlussvorrichtung (150) umfasst, die dazu konfiguriert ist, bei einer Temperatur von über 150°C und/oder bei einem Druck von über 200 Bar zumindest teilweise zu brechen, und mindestens einen Kopf (141) und mindestens einen Körper (142) umfasst, wobei der Körper (142) mindestens einen ersten Teil (154) umfasst, durch den er mittels Verschraubung mit dem Wärmetauscher (130) fest verbunden ist, und mindestens einen zweiten modularen Teil (155) umfasst, der auf dem ersten Teil (154) angebracht ist und in dem die Verschlussvorrichtung (150) angeordnet ist.

2. Elektrische Energiespeichervorrichtung (100) nach dem vorhergehenden Anspruch, bei der der Wärmetauscher (130) mindestens zwei Sammelkästen (132, 133) umfasst, die sich in einer Querrichtung erstrecken und zwischen denen sich mindestens zwei Kühlfluid-Zirkulationsleitungen (131) erstrecken, die fluidisch mit jedem Sammelkasten verbunden sind, wobei das Kühlfluid-Freisetzungselement (140) an einem Querende (134, 135, 136, 137) mindestens eines der Sammelkästen (132, 133) angeordnet ist.

3. Elektrische Energiespeichervorrichtung (100) nach dem vorhergehenden Anspruch, bei der der Wärmetauscher (130) mindestens einen Zwischenverteiler (138) umfasst, der zwischen den beiden Sammelkästen (132, 133) parallel zu diesen beiden Sammelkästen angeordnet ist, wobei mindestens ein Kühlfluid-Freisetzungselement (140) an einem Ende dieses Zwischenverteilers (138) angeordnet ist.

4. Elektrische Energiespeichervorrichtung (100) nach dem vorhergehenden Anspruch, bei der der Wärmetauscher (130) eine Vielzahl von Zwischenverteilern (138) umfasst, die zwischen den beiden Sammelkästen (132, 133) angeordnet sind.

5. Elektrische Energiespeichervorrichtung (100) nach einem der Ansprüche 4 bis 6, bei der sich das mindestens eine Kühlfluid-Freisetzungselement (140) entlang einer Hauptausdehnungsachse (X) parallel zu einer Hauptausdehnungsrichtung (D) des mindestens einen Sammelkastens (132, 133) erstreckt, an dem dieses mindestens eine Kühlfluid-Freisetzungselement (140) angeordnet ist.

6. Elektrische Energiespeichervorrichtung (100) nach einem der Ansprüche 2 bis 5, bei der sich das mindestens eine Kühlfluid-Freisetzungselement (140) entlang einer Hauptausdehnungsachse (D) erstreckt, die eine Hauptausdehnungsrichtung (D) des mindestens einen Sammelkastens (132, 133) schneidet, an dem dieses mindestens eine Kühlfluid-Freisetzungselement (140) angeordnet ist.

7. Elektrische Energiespeichervorrichtung (100) nach einem der vorhergehenden Ansprüche, bei der das Kühlfluid ein Fluid ist, das hauptsächlich aus Kohlendioxid besteht.

8. Kraftfahrzeug, umfassend mindestens eine elektrische Energiespeichervorrichtung (100) nach einem der vorhergehenden Ansprüche.

## Claims

1. Electrical energy storage device (100) for a vehicle, comprising at least one casing (110) in which are housed at least one electrical energy storage cell (120) and at least one heat exchanger (130) configured to operate a heat exchange between a cooling fluid adapted to circulate in the at least one heat exchanger (130) and the electrical energy storage cell(s) (120), **characterized in that** the heat exchanger (130) comprises at least one cooling fluid release member (140) configured to release the cooling fluid into the casing (110) and **in that** the cooling fluid release member (140) comprises at least one obturation device (150) configured to rupture, at least partially, at a temperature higher than 150°C and/or at a pressure higher than 200 Bars and comprises at least one head (141) and at least one body (142), the body (142) comprising at least a first part (154) by which it is made integral, by screwing, with the heat exchanger (130) and at least a second modular part (155) attached to the first part (154) and in which the obturation device (150) is arranged.

2. Electrical energy storage device (100) according to the preceding claim, in which the heat exchanger (130) comprises at least two collecting boxes (132, 133) extending along a transverse direction and between which extend at least two cooling fluid circulation conduits (131) fluidically connected to each collecting box, the cooling fluid release member (140) being arranged at a transverse end (134, 135, 136, 137) of at least one of the collecting boxes (132, 133).

3. Electrical energy storage device (100) according to the preceding claim, in which the heat exchanger (130) comprises at least one intermediate manifold (138) arranged between the two collecting boxes (132, 133), parallel to these two collecting boxes, at least one cooling fluid release member (140) being arranged at one end of this intermediate manifold (138).

4. Electrical energy storage device (100) according to the preceding claim, in which the heat exchanger (130) comprises a plurality of intermediate manifolds (138) arranged between the two collecting boxes (132, 133).

5. Electrical energy storage device (100) according to any one of claims 4 to 6, in which the at least one cooling fluid release member (140) extends along a main extension axis (X) parallel to a main extension direction (D) of the at least one collecting box (132, 133) on which this at least one cooling fluid release member (140) is arranged.

6. Electrical energy storage device (100) according to any one of claims 2 to 5, in which the at least one cooling fluid release member (140) extends along a main extension axis (D) intersecting a main extension direction (D) of the at least one collecting box (132, 133) on which this at least one cooling fluid release member (140) is arranged.

7. Electrical energy storage device (100) according to any one of the preceding claims, in which the cooling fluid is a fluid mainly composed of carbon dioxide.

8. Motor vehicle, comprising at least one electrical energy storage device (100) according to any one of the preceding claims.
